# EUROPÄISCHE PATENTSCHRIFT

(11) **EP 3 269 227 B1**
(45) Veröffentlichungstag und Bekanntmachung des Hinweises auf die Patenterteilung: **31.07.2019**
(21) Anmeldenummer: 17180697.9
(22) Anmeldetag: 11.07.2017
(51) Int. Cl.: A01F 12/32

(54) **SIEBANTRIEB FÜR EINEN MÄHDRESCHER**
SIEVE DRIVE FOR A COMBINE HARVESTER
ENTRAÎNEMENT DE TAMIS POUR UNE MOISSONNEUSE-BATTEUSE

(30) Priorität: 12.07.2016 DE 102016212637
(43) Veröffentlichungstag der Anmeldung: 17.01.2018
(73) Patentinhaber: Deere & Company, Moline, IL 61265 (US)
(72) Erfinder: Broschart, Marco, 68163 Mannheim (DE)
(74) Vertreter: Holst, Sönke

(56) Entgegenhaltungen:
- DE-A1-102009 026 870
- US-A1- 2003 186 731
- US-A1- 2013 109 450

## Beschreibung

Die Erfindung betrifft einen Mähdrescher nach dem Oberbegriff des Anspruch 1.

### Stand der Technik

Mähdrescher dienen zur Ernte von Korn. Die oberirdischen Teile von Pflanzen, wie Soja, Weizen oder Hafer, werden abgeschnitten oder aufgesammelt oder abgestreift oder die Fruchtstände der Pflanzen, wie Mais oder Sonnenblumen, werden abgetrennt und einer Dresch- und Trenneinrichtung zugeführt, um das Korn von den übrigen Bestandteilen des Ernteguts zu trennen. Nach dem Dresch- und Trennvorgang befinden sich noch Verunreinigungen im Korn, wie Strohteilchen und Spreu. Das beim Dreschen und Trennen gewonnene Gemisch aus Korn und Verunreinigungen wird daher einem Reinigungssystem zugeführt, das üblicherweise ein Obersieb und ein Untersieb und optional ein Vorsieb umfasst.

Die Siebe sind üblicherweise an vorderen und hinteren Hängern aufgehängt und werden mittels eines Exzenter-Antriebes bewegt, wie er beispielsweise in der US 2013/0109450 A1 und in der Figur 2 der vorliegenden Unterlagen gezeigt wird. Auf diese Weise werden die Siebe in eine pendelnde Hin- und Herbewegung versetzt, bei der sie sich auf elliptischen oder kreisförmigen Bahnen nach vorn und hinten und nach oben und unten bewegen. Zudem werden sie von unten her mit einem Luftstrom beaufschlagt. Man erreicht so, dass das Gemisch auf dem Sieb periodisch nach oben geworfen wird (am oberen Umkehrpunkt der Bahn) und nach Zurücklegen einer Wurfparabel wieder auf dem Sieb landet. Durch den Luftstrom und den Aufprall auf dem Sieb nach dem Wurf wird das schwerere Korn von den leichteren Verunreinigungen getrennt.

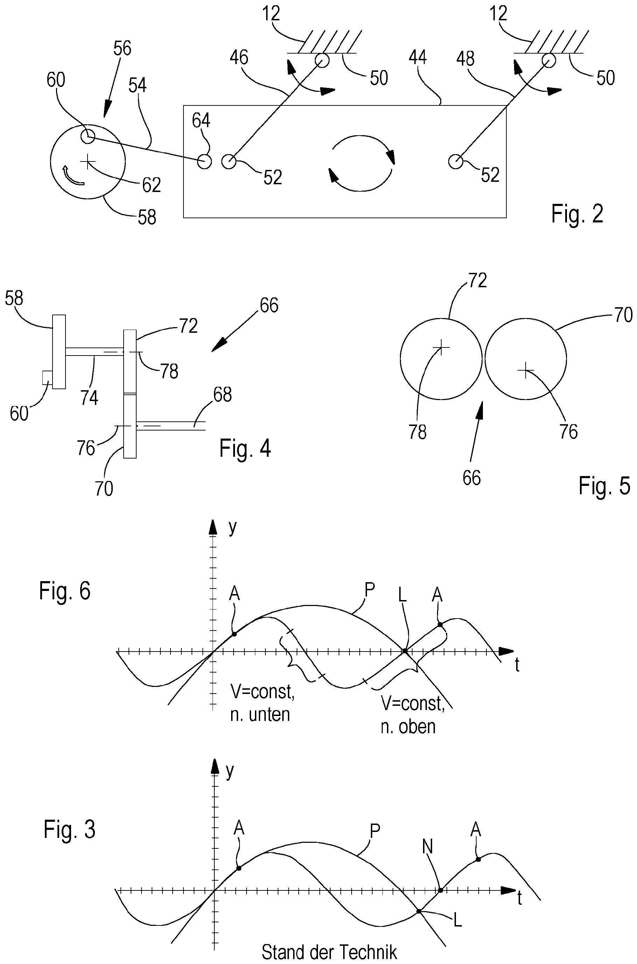

Im Stand der Technik ist die Drehzahl des Antriebs konstant. Das führt zu einer sich zumindest etwa sinusförmig ändernden, vertikalen Position Y des Siebs als Funktion der Zeit t, wie in der Figur 3 gezeigt ist. Das Erntegut wird kurz vor dem oberen Umkehrpunkt am Abwurfpunkt A nach oben und hinten hin abgeworfen und legt dann die Wurfparabel P zurück. Schließlich landet es wieder am Punkt L auf dem Sieb. Die Trennwirkung des Siebes ist erfahrungsgemäß dann am besten, wenn der Punkt L dort liegt, wo die Geschwindigkeit des Siebes nach oben am größten ist, da dann der größte Geschwindigkeitsunterschied zwischen der Bewegung des Gemisches nach unten und der Bewegung des Siebes nach oben vorliegt. Der optimale Punkt L liegt beim Nulldurchgang N der vertikalen Siebbewegung (wenn die vertikale Position Y= Y₀ sin (ωt) mit Y₀ = Amplitude und ω = Kreisfrequenz der Bewegung ist, ist die Geschwindigkeit V = V₀ cos (ωt), mit V₀ = max. Geschwindigkeit, mit Maximum bei Winkeln von 2n*π, n = ganze Zahl). Der Entwerfer des Mähdreschers muss somit versuchen, die Drehzahl des Siebantriebs und auch alle anderen Parameter der Reinigung so zu legen, dass die Punkte L und N bei möglichst allen Bedingungen von Erntegutart, Durchsatz, Verunreinigungsanteil etc. möglichst nahe beieinander liegen, anders als in der Figur 3 gezeigt.

Da die Einhaltung dieser Bedingung in der Praxis relativ schwierig ist, wurde vorgeschlagen, den Hub des Exzenterantriebs und/oder seine Drehzahl veränderlich zu gestalten (DE 27 53 505 A1, EP 2 936 968 A1), um sie an die vorhandenen Erntebedingungen anzupassen. Hierzu ist eine Sensorik erforderlich, um die Menge des auf dem Sieb vorhandenen Gemischs (oder eine Erkennung der verschiedenen Trennphasen des Siebes anhand einer gemessenen Abscheidekurve, EP 2 550 852 A1) zu erfassen und eine Aktorik zur Drehzahl- und ggf. Hubverstellung des Antriebs. Weiterhin werden üblicherweise die Drehzahl des Gebläses zur Beaufschlagung des Siebes mit einem Luftstrom und die Größe der Sieböffnungen abhängig von den jeweiligen Erntebedingungen variiert, um eine optimale Reinigungswirkung zu erzielen. Die Änderung der Gebläsedrehzahl dient dazu, den Punkt L möglichst nahe an den Punkt N zu bringen und so die Abscheidewirkung zu verbessern.

Die DE 10 2009 026 870 A1 beschreibt einen Antrieb eines Strohschüttlers eines Mähdreschers, bei dem sich die Geschwindigkeit der Drehbewegung der Kurbelwelle während eines Umlaufes kontinuierlich ändert, was beispielsweise durch ein Getriebe mit einem sich während einer Umdrehung änderndem Übersetzungsverhältnis erfolgen kann. Dadurch erreicht man, dass sich der Strohschüttler weiterhin auf einer kreisförmigen Bahn bewegt, aber aufgrund der sich nacheinander ändernden Drehgeschwindigkeit der Kurbelwelle fortlaufend beschleunigt und verzögert wird, und zwar stärker als durch die zuvor bekannte, nur durch die Kreisbahn bedingte Beschleunigung. Auf diese Weise wird die Separationsleistung des Strohschüttlers verbessert, da das Erntegut auf dem Strohschüttler stärker als bisher in vertikale Richtung beschleunigt und nach oben geworfen wird. Der Strohschüttler vollführt somit eine in gewissem Maße ruckelnde Bewegung.

### Aufgabe

Bei den Siebantrieben mit veränderbarem Hub und Drehfrequenz bleibt die Drehzahl des Antriebs bei konstanten Erntegutbedingungen konstant, sodass sich das Sieb weiterhin entsprechend der Sinuskurve der Figur 3 bewegt, wenn auch mit veränderlicher Amplitude und/oder Frequenz, was bedeutet, dass weiterhin die erwähnte Bedingung möglichst genau einzuhalten ist, wozu die aufwändige Sensorik und Aktorik benötigt wird, die dennoch nicht in allen Bedingungen zufriedenstellen arbeiten wird. Die Vorgehensweise nach DE 10 2009 026 870 A1 mit fortlaufender Beschleunigung und Verzögerung während einer Umdrehung des Antriebs würde zu einer ruckelnden Siebbewegung führen, die kaum zu einer brauchbaren Trennung von Korn und Verunreinigungen führt.

Die Aufgabe der vorliegenden Erfindung wird darin gesehen, einen demgegenüber verbesserten Mähdrescher vorzuschlagen, der die erwähnten Nachteile nicht oder nur in vermindertem Maße aufweist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Antriebsanordnung zum Antrieb eines durch ein Gebläse mit Luft beaufschlagbaren Siebes eines Mähdreschers, das an Hängern pendelnd aufgehängt und mittels eines Antriebs in eine alternierende Bewegung versetzbar ist, zeichnet sich dadurch aus, dass der Antrieb derart ausgebildet ist, dass die Weg-Zeit-Charakteristik des Siebes über einen wesentlichen Anteil der Phase, in der sich das Sieb nach oben bewegt, zumindest näherungsweise linear ist.

Mit anderen Worten führt der Antrieb des an Hängern aufgehängten Siebes nicht, wie im Stand der Technik, zu einem sinusförmigen Verlauf der vertikalen Position des Siebes als Funktion der Zeit, wie er in der Figur 3 gezeigt und mit den oben erwähnten Problemen behaftet ist, sondern die vertikale Geschwindigkeit des Siebes ist über einen wesentlichen Anteil oder sogar den größten Teil der nach oben gerichteten Bewegung des Siebes wenigstens näherungsweise konstant. Auf diese Weise erreicht man, dass die Wirkung des Siebes unempfindlicher gegen sich ändernde Erntegutbedingungen wird, denn sich aufgrund der Erntegutbedingungen ändernde Landezeitpunkte haben keinen oder kaum noch Einfluss auf die vertikale Geschwindigkeit des Siebes bei der Landung, was die Abscheidung des Siebes positiv beeinflusst, ohne dass eine Nachregelung der Frequenz oder des Hubes des Siebes notwendig wäre. Diese kann, wie auch eine selbsttätige Regelung der Gebläsedrehzahl und der Sieböffnung, jedoch bei Bedarf vorgesehen sein.

Der Antrieb des Siebes umfasst einen in Drehung versetzbaren Exzentertrieb, der über eine Kurbelstange mit dem Sieb verbunden und mit einer sich während einer Umdrehung des Exzentertriebes ändernden Drehgeschwindigkeit antreibbar ist.

Der Antrieb kann ein Getriebe mit einer Eingangswelle umfassen, die mit konstanter Drehgeschwindigkeit antreibbar ist, und das eine mit dem Exzentertrieb antriebsverbundene Ausgangswelle aufweist, die durch ein Getriebe mit einem sich während einer Umdrehung änderndem Übersetzungsverhältnis mit der Eingangswelle verbunden ist. Als derartiges Getriebe kommt ein Unrund-Getriebe infrage, das beispielsweise nicht-kreisförmige Zahnräder oder Riemenscheiben umfasst, die direkt miteinander kämmen oder durch ein Zugmittel (beispielsweise Kette oder Riemen) untereinander verbunden sind. Eine andere mechanische Lösung umfasst ein Planetengetriebe mit einem Bestandteil, der in eine Bewegung mit zeitlich variierender Geschwindigkeit versetzbar ist, beispielsweise über einen den Bestandteil exzentrisch halternden Kurbeltrieb, oder eine Kurbelanordnung mit phasenverschobener Hubänderung oder einen Exzentertrieb, der auf eine einen Endes drehbar gelagerte Stange wirkt, die anderen Endes mit einer quer dazu angeordneten, linear verschiebbaren Schubstange interagiert.

Vorzugsweise ist der Antrieb derart ausgebildet, dass die Weg-Zeit-Charakteristik des Siebes während der Phase, in der sich das Sieb nach unten bewegt, zumindest näherungsweise linear und dann schneller als in der Phase ist, in der sich das Sieb nach oben bewegt.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers,
- Fig. 2: eine schematische seitliche Ansicht eines Siebes der Reinigung des Mähdreschers,
- Fig. 3: ein Weg-Zeit-Diagramm eines Siebantriebs nach dem Stand der Technik,
- Fig. 4: eine Draufsicht auf ein Getriebe eines erfindungsgemäßen Siebantriebes,
- Fig. 5: eine Seitenansicht des Getriebes der Figur 4, und
- Fig. 6: ein Weg-Zeit-Diagramm eines erfindungsgemäßen Siebantriebs.

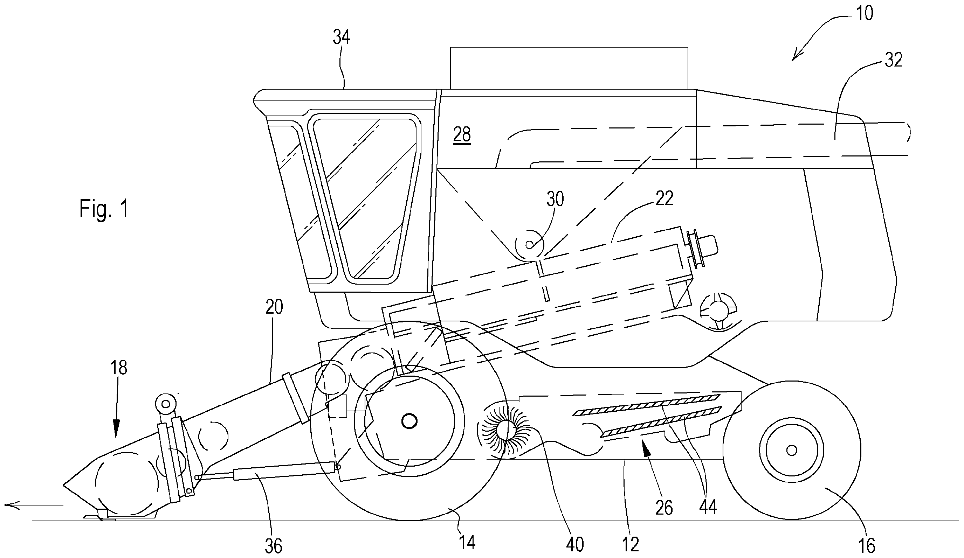

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert.

Die Reinigungseinrichtung 26 umfasst in an sich bekannter Weise ein oberes Sieb 44 und ein unteres Sieb 44, die durch ein Gebläse 40 mit einem die Siebe nach hinten und oben durchströmenden Luftstrom beaufschlagt werden. Die Größe der Sieböffnungen und die Drehzahl des Gebläses 40 kann in an sich bekannter Art durch eine selbsttätige Reinigungseinstellung oder durch den Bediener aus der Fahrerkabine 34 verändert werden.

Die Figur 4 zeigt detaillierter, wie die Siebe 44 aufgehängt sind und angetrieben werden. Bei dem in der Figur 4 gezeigten Sieb 44 kann es sich um das obere Sieb 44 oder das untere Sieb 44 der Figur 1 handeln. Es wäre denkbar, jedes der Siebe 44 mit dem gezeigten Antrieb auszustatten, oder beide Siebe 44 zu koppeln und mit einem gemeinsamen Antrieb zu versehen. Das in der Figur 2 gezeigte Sieb 44 ist an einem vorderen Hänger 46 und einem hinteren Hänger 48 aufgehängt, die jeweils mit ihren oberen Enden an mit dem Fahrgestell 12 gekoppelten Halterungen 50 um horizontale und quer zur Vorwärtsrichtung des Mähdreschers 10 verlaufende Achsen frei schwenkbar gelagert sind. Die Hänger 46 sind zudem mit ihren unteren Enden durch Lagerungen 52 um horizontale und quer zur Vorwärtsrichtung des Mähdreschers 10 verlaufende Achsen frei schwenkbar an einem Rahmen des Siebes 44 gelagert. Gleichartige Hänger 46, 48, Halterungen 50 und Lagerungen 52 sind auch auf der anderen, in der Figur 2 nicht gezeigten Seite des Mähdreschers 10 vorgesehen. Weiterhin ist das Sieb 44 über eine Kurbelstange 54 mit einem Exzentertrieb 56 gekoppelt, der sich aus einem mittig um eine Achse 62 drehbar gelagerten, durch ein in den Figuren 4 und 5 gezeigtes Getriebe 66 um die Achse 62 in Drehung versetzbares Antriebsrad 58 mit einem exzentrisch zur Achse 62 angeordneten Zapfen 60 aufbaut. Die Kurbelstange 54 ist einen Endes mit dem Zapfen 60 drehbar verbunden und anderen Endes mit einer Lagerung 64 am Sieb 44 angekoppelt. Die Achse 62 und die Achsen des Zapfens 60 und der Lagerung 64 sind horizontal und quer zur Vorwärtsrichtung des Mähdreschers 10 orientiert.

Der Antrieb des Exzentertriebes 56 und somit des Siebes 44 erfolgt über ein Getriebe 66, das in den Figuren 4 und 5 dargestellt ist. Das Getriebe 66 umfasst ein erstes Zahnrad 70, das durch eine Eingangswelle 68 in Drehung versetzbar ist, und ein mit dem ersten Zahnrad 70 kämmendes, zweites Zahnrad 72, das mit einer Ausgangswelle 74 verbunden ist, die auch mit dem Antriebsrad 58 gekoppelt ist. Die Eingangswelle 68 ist drehbar gelagert, wie es auch die Ausgangswelle 74 ist. Als Besonderheit sind die Drehachse 76 des ersten Zahnrads 70 (und somit die Eingangswelle 68) und die Drehachse 78 des zweiten Zahnrads 72 (und somit die Ausgangswelle 74) exzentrisch zu der jeweiligen Mittelachse der Zahnräder 70, 72 angeordnet. Die Zahnräder 70, 72 kämmen über ihre gesamte Drehbewegung miteinander und die Exzentrizität der Drehachsen 76, 78 führt dazu, dass sich das Übersetzungsverhältnis des Getriebes 66 während einer Umdrehung der Eingangswelle 68 kontinuierlich ändert. Während die Eingangswelle 68 mit konstanter Drehzahl angetrieben wird, dreht sich das Antriebsrad 58 somit kontinuierlich schneller und langsamer. Das Getriebe 66 erzeugt eine Überlagerung einer ersten Drehbewegung, die durch die Eingangswelle 68 erzielt wird, mit einer zweiten, phasenverschobenen, durch die Form der Zahnräder 70, 72 bewirkten Drehbewegung.

Die Figur 6 zeigt, analog zur Figur 3, die durch das Getriebe 66 erzielte, vertikale Position Y des Siebs als Funktion der Zeit t. Es ist erkennbar, dass die Sinuskurve der Figur 3 durch eine andere Kurve ersetzt wurde, bei der sich das Sieb 44 über einen wesentlichen Anteil der Phase der nach oben gerichteten Bewegung (nämlich etwa 2/3 davon) mit einer nahezu konstanten Geschwindigkeit (= Steigung in Figur 6) bewegt. Die Phase der nach unten gerichteten Bewegung erfolgt ebenfalls über einen wesentlichen Teil mit konstanter Geschwindigkeit (= Steigung in Figur 6), jedoch wesentlich schneller als die mit konstanter Geschwindigkeit nach oben erfolgende Bewegung. Zwischen diesen Phasen liegen, den unteren und oberen Umkehrpunkten des Siebes 44 benachbart, abgerundete Übergänge.

Die Figur 6 zeigt weiterhin das Wurfverhalten des Gemisches auf dem Sieb 44. Nach dem Abwurf im Punkt A legt das Gemisch die Wurfparabel P zurück und landet beim Punkt L wieder auf dem Sieb 44. Dort ist die Bewegung des Siebs 44 mit konstanter Geschwindigkeit nach oben gerichtet, was zu einer guten Trennwirkung des Siebes 44 führt. Anders als im Stand der Technik nach Figur 3 spielt es kaum eine Rolle, wenn der Punkt L bei sich ändernden Erntegutbedingungen nach links oder rechts verschieben sollte, denn die Steigung der Kurve ist ja über weite Bereiche der Phase der nach oben gerichteten Bewegung konstant. Demnach reagiert die mit dem erfindungsgemäßen Antrieb ausgestattete Reinigungseinrichtung 26 wesentlich weniger empfindlich auf Änderungen der Erntegutbedingungen als die bisherigen Reinigungseinrichtungen.

Man kann den Punkt L, wenn gewünscht, relativ weit nach links z.B. an das untere Ende des linearen Bereichs der nach oben gerichteten Phase der Bewegung des Siebes 44 legen, was dem Erntegut einen vorteilhaften, relativ langen Gleitweg auf dem Sieb 44 ermöglicht, bevor es am nächsten Punkt A wieder abgeworfen wird. Zudem ist die horizontale Relativgeschwindigkeit zwischen dem Sieb 44 und dem Gemisch im Zeitpunkt des Aufpralles relativ klein, was die Wahrscheinlichkeit erhöht, dass Körner durch die Sieböffnungen fallen und ebenfalls zu einer guten Reinigungswirkung beiträgt.

Als weiterer Vorteil ist zu nennen, dass die größten Geschwindigkeitsänderungen (Beschleunigungen) des Siebes 44 in der Nähe der unteren und oberen Umkehrpunkte des Siebes 44 stattfinden. Wenn diese - für die Reinigungswirkung nachteiligen - Beschleunigungen auftreten, befindet sich das Gemisch jedoch gerade in der Wurfphase und nicht im Kontakt mit dem Sieb 44, sodass sich die besagten Beschleunigungen nicht nachteilig auf die Reinigungswirkung auswirken.

Im Ergebnis ist die beschriebene Reinigungseinrichtung 26 relativ unempfindlich gegen Änderungen von Ernteguteigenschaften und gegen Durchsatzänderungen. Dadurch können effektivere Regelschleifen zur Kontrolle der Gebläsedrehzahl und der Sieböffnung als bisher eingesetzt werden.

## Patentansprüche

1. Mähdrescher (10) mit einer Reinigungseinrichtung (26), die ein Sieb (44) umfasst, das durch ein Gebläse (40) mit einem das Sieb (44) nach hinten und oben durchströmenden Luftstrom beaufschlagbar ist, wobei das Sieb (44) an Hängern (46, 48) pendelnd aufgehängt und mittels eines Antriebs, der einen in Drehung versetzbaren Exzentertrieb (56) umfasst, der über eine Kurbelstange (54) mit dem Sieb (44) verbunden ist, in eine alternierende Bewegung versetzbar ist, **dadurch gekennzeichnet, dass** der Antrieb derart ausgebildet ist, dass die Weg-Zeit-Charakteristik des Siebes (44) über den zwischen abgerundeten Übergängen an den unteren und oberen Umkehrpunkten des Siebes (44) liegenden Anteil der Phase, in der sich das Sieb (44) nach oben bewegt, zumindest näherungsweise linear ist und dass der Exzentertrieb (56) mit einer sich während einer Umdrehung des Exzentertriebes (56) ändernden Drehgeschwindigkeit antreibbar ist.

2. Mähdrescher (10) nach Anspruch 1, wobei der Antrieb ein Getriebe (66) mit einer Eingangswelle (68) umfasst, die mit konstanter Drehgeschwindigkeit antreibbar ist, und dass das Getriebe (66) eine mit dem Exzentertrieb (56) antriebsverbundene Ausgangswelle (74) aufweist, die durch das Getriebe (66) mit einem sich während einer Umdrehung änderndem Übersetzungsverhältnis mit der Eingangswelle (68) verbunden ist.

3. Mähdrescher (10) nach Anspruch 2, wobei das Getriebe (66) ein Unrund-Getriebe ist.

4. Mähdrescher (10) nach einem der vorhergehenden Ansprüche, wobei der Antrieb derart ausgebildet ist, dass die Weg-Zeit-Charakteristik des Siebes (44) während der Phase, in der sich das Sieb nach unten bewegt, zumindest näherungsweise linear und schneller als in der Phase ist, in der sich das Sieb (44) nach oben bewegt.

5. Mähdrescher (10) nach Anspruch 4, wobei der Antrieb derart ausgebildet ist, dass die Weg-Zeit-Charakteristik des Siebes (44) zwischen der Phase, in der sich das Sieb nach unten bewegt und der Phase, in der sich das Sieb (44) nach oben bewegt, abgerundet ist.

## Claims

1. Combine harvester (10) having a cleaning device (26) which comprises a sieve (44), to which an air stream flowing through rearward and upward can be applied to the sieve (44) by a fan (40), the sieve (44) being suspended pendulously on hangers (46, 48) and being displaceable in an alternating movement by means of a drive, which comprises an eccentric drive (56) that can be set rotating and is connected to the sieve (44) via a connecting rod (54), **characterized in that** the drive is formed in such a way that the distance-time characteristic of the sieve (44) over the proportion of the phase in which the sieve (44) moves upward and which is between rounded transitions at the lower and upper reversal points of the sieve (44) is at least approximately linear, and **in that** the eccentric drive (56) can be driven at a rotational speed that changes during a revolution of the eccentric drive (56).

2. Combine harvester (10) according to Claim 1, wherein the drive comprises a transmission (66) having an input shaft (68) which can be driven at constant rotational speed, and in that the transmission (66) has an output shaft (74) which has a drive connection to the eccentric drive (56) and which is connected to the input shaft (68) by means of the transmission (66) with a transmission ratio that changes during a revolution.

3. Combine harvester (10) according to Claim 2, wherein the transmission (66) is a non-circular gear.

4. Combine harvester (10) according to one of the preceding claims, wherein the drive is formed in such a way that the distance-time characteristic of the sieve (44) during the phase in which the sieve moves downward is at least approximately linear and faster than in the phase in which the sieve (44) moves upward.

5. Combine harvester (10) according to Claim 4, wherein the drive is formed in such a way that the distance-time characteristic of the sieve (44) between the phase in which the sieve moves downward and the phase in which the sieve (44) moves upward is rounded.

## Revendications

1. Moissonneuse-batteuse (10) comprenant un dispositif de nettoyage (26) qui comporte un tamis (44) qui peut être, au moyen d'un ventilateur (40), exposé à un flux d'air traversant le tamis (44) vers l'arrière et vers le haut, le tamis (44) étant suspendu de manière oscillante à des éléments de suspension (46, 48) et pouvant être animé d'un mouvement alternatif au moyen d'un entraînement qui comporte un entraînement excentrique (56) pouvant être mis en rotation, lequel est relié au tamis (44) par le biais d'une bielle (54), **caractérisée en ce que** l'entraînement est réalisé de telle sorte que la caractéristique de déplacement-temps du tamis (44) pendant la partie, située entre des transitions arrondies au niveau des points d'inversion supérieur et inférieur du tamis (44), de la phase pendant laquelle le tamis (44) se déplace vers le haut est au moins approximativement linéaire et que l'entraînement excentrique (56) peut être entraîné à une vitesse de rotation variant pendant une révolution de l'entraînement excentrique (56).

2. Moissonneuse-batteuse (10) selon la revendication 1, dans laquelle l'entraînement comporte une transmission (66) dotée d'un arbre d'entrée (68) qui peut être entraîné à une vitesse de rotation constante, et en ce que la transmission (66) comprend un arbre de sortie (74) relié par entraînement à l'entraînement excentrique (56), lequel arbre de sortie est relié, au moyen de la transmission (66), à l'arbre d'entrée (68) suivant un rapport de multiplication variant pendant une révolution.

3. Moissonneuse-batteuse (10) selon la revendication 2, dans laquelle la transmission (66) est une transmission excentrique.

4. Moissonneuse-batteuse (10) selon l'une des revendications précédentes, dans laquelle l'entraînement est réalisé de telle sorte que la caractéristique de déplacement-temps du tamis (44) pendant la phase pendant laquelle le tamis se déplace vers le bas est au moins approximativement linéaire et plus rapide que pendant la phase pendant laquelle le tamis (44) se déplace vers le haut.

5. Moissonneuse-batteuse (10) selon la revendication 4, dans laquelle l'entraînement est réalisé de telle sorte que la caractéristique de déplacement-temps du tamis (44) est arrondie entre la phase pendant laquelle le tamis se déplace vers le bas et la phase pendant laquelle le tamis (44) se déplace vers le haut.
